Europäisches Patentamt

European Patent Office

Office européen des brevets

(19)

(11) Numéro de publication : **0 475 828 A1**

(12) **DEMANDE DE BREVET EUROPEEN**

(21) Numéro de dépôt : **91402391.6**

(22) Date de dépôt : **06.09.91**

(51) Int. Cl.⁵ : **A01M 17/00**

(30) Priorité : **06.09.90 FR 9011081**

(43) Date de publication de la demande :
**18.03.92 Bulletin 92/12**

(84) Etats contractants désignés :
**AT BE CH DE DK ES FR GB GR IT LI LU NL SE**

(71) Demandeur : **DESINSECTISATION MODERNE**
**34, rue du Contrat Social**
**F-76000 Rouen (FR)**

(72) Inventeur : **Vacquer, Benoit**
**2 Bis, rue Louis Auber**
**F-76000 Rouen (FR)**

(74) Mandataire : **Nony, Michel et al**
**Cabinet NONY & CIE, 29, rue Cambacérès**
**F-75008 Paris (FR)**

(54) **Procédé et dispositif pour le déploiement d'une gaine à l'intérieur d'une masse de matière pulvérulente.**

(57)    Dans le procédé de déploiement d'une gaine (1) à l'intérieur d'une masse de matière pulvérulente (18), une gaine est amenée dans une configuration compacte en un point de la masse de matière pulvérulente (18).

En maintenant fixe une extrémité de la gaine (1), on déplace l'autre extrémité vers l'extérieur de la masse de matière pulvérulente (18) en provoquant ainsi le déploiement de la gaine.

Le dispositif pour la mise en oeuvre du procédé comporte un conteneur (2) ouvert à une de ses extrémités pour recevoir la gaine (1) dans sa configuration comptacte, une pièce (6), de préférence profilée pour faciliter la pénétration du conteneur à l'intérieur de la masse pulvérulente (18), étant solidaire de la gaine (1) et s'adaptant à l'avant du conteneur (2) de manière détachable pour rester dans la masse de matière pulvérulente lors du déploiement de la gaine.

EP 0 475 828 A1

FIG.3

L'invention se rapporte à un procédé et à un dispositif pour le déploiement d'une gaine à l'intérieur d'une masse de matière pulvérulente telle que des grains de céréales.

La présente invention permet en particulier de ménager un accès à l'intérieur d'une masse de matière pulvérulente, se trouvant par exemple dans une formation géologique, une cale d'un bateau, un silo ou toute autre unité de stockage.

En ménageant de tels accès, il est possible d'effectuer des observations, de prélever des échantillons, ou d'effectuer un traitement désiré.

Cela est particulièrement important dans le cas de grains pour pouvoir les inspecter et/ou pour les protéger efficacement et durablement, notamment contre des parasites.

La présente invention a pour objet un procédé de déploiement d'une gaine à l'intérieur d'une masse de matière pulvérulente, selon lequel la gaine est déployée à partir d'une configuration compacte, caractérisé par le fait que la gaine est amenée dans sa configuration compacte en un point de la masse de matière pulvérulente et, qu'en maintenant fixe une extrémité de la gaine, on déplace l'autre extrémité vers l'extérieur de la masse de matière pulvérulente en provoquant ainsi le déploiement de la gaine.

Dans un mode de mise en oeuvre préféré, on place la gaine dans sa configuration compacte dans un conteneur dont l'extrémité détachable, solidaire d'une extrémité de la gaine, reste en position fixe dans la masse de matière pulvérulente lorsque l'on déplace le conteneur vers l'extérieur de la masse pulvérulente pour déployer la gaine.

Selon un mode de mise en oeuvre préféré de l'invention, l'on déplace le conteneur dans la masse pulvérulente à l'aide d'une sonde fonctionnant par percussions ou vibrations dans l'un ou l'autre sens.

Dans l'une de ses applications préférées, la présente invention a pour objet un procédé de traitement de grains de céréales, caractérisé par le fait que l'on déploie au moins une gaine perméable à travers une masse de grains de céréales par le procédé qui a été décrit ci-dessus ; que l'on injecte un produit de traitement des céréales, par exemple de l'air sec ou chaud, pour les aérer ou les sécher ou des matières fumigatoires ou gazeuses de lutte contre les parasites et/ou que l'on ventile ou l'on met en dépression l'intérieur de la gaine pour, par exemple, extraire un gaz se trouvant dans la masse des grains.

La présente invention a également pour objet un dispositif pour la mise en oeuvre du procédé qui vient d'être décrit, ce dispositif comportant une gaine apte à être mise dans une première configuration compacte et dans une deuxième configuration déployée, caractérisé par le fait qu'il comporte un conteneur ouvert à une de ses extrémités pour recevoir la gaine dans sa configuration compacte, une pièce de préférence profilée pour faciliter la pénétration du conteneur à l'intérieur de la masse pulvérulente, étant solidaire d'une extrémité de la gaine et s'adaptant de manière détachable sur l'extrémité ouverte du conteneur de manière à rester dans la masse pulvérulente lors du déploiement de la gaine.

Dans un mode de réalisation préféré, le conteneur comporte un moyen de retenue pour retenir la gaine dans sa configuration compacte, à l'intérieur du conteneur lors de son déploiement.

Ce moyen peut être constitué par exemple par un goupillon muni d'une série de fils semi-rigides, disposés radialement et dont les extrémités prennent appui contre l'intérieur de la gaine dans sa configuration compacte, ou encore par une mousse déformable qui retient la gaine dans sa configuration compacte en exerçant une certaine pression contre la surface intérieure de la gaine.

La gaine est avantageusement déployée jusqu'à la surface de la matière pulvérulente. Elle permet ainsi d'effectuer des inspections, mesures ou prélèvements pour connaître la composition ou l'état de la masse de matière pulvérulente.

La gaine permet aussi d'effectuer le traitement de la matière pulvérulente en injectant par exemple un produit chimique destiné à éliminer des parasites se trouvant à l'intérieur de la masse de grains, ou encore d'effectuer une ventilation ou une extraction de l'air ou d'un gaz précédemment injecté.

Dans sa configuration compacte, la gaine peut être repliée, plissée, comprimée, ondulée, convolutée ou en forme de soufflet, sous la seule réserve qu'elle puisse être déployée en exerçant une traction axiale sur une de ses extrémités.

Dans une première variante de réalisation, la paroi de la gaine est réalisée en une matière poreuse, par exemple en tissu, de manière à ce que, la gaine puisse être facilement traversée par un gaz ou un liquide.

Dans une seconde variante, la paroi de la gaine comporte à cet effet des ouvertures, par exemple régulièrement espacées à la surface de la gaine, dont la taille est de préférence suffisamment faible pour empêcher une pénétration significative de la matière pulvérulente à l'intérieur de la gaine.

Dans ce cas, la gaine peut être réalisée par exemple à l'aide de feuille mince d'aluminium en étant annelée pour présenter la forme d'un soufflet en accordéon de section circulaire de sorte que la gaine puisse être stockée dans le conteneur dans sa configuration compacte pour être ensuite déployée selon l'invention.

Conformément à l'invention, la gaine peut être réalisée par une paroi déformable, de préférence perméable, qui est supportée par une armature constituée par exemple par un fil hélicoïdal en métal ou en plastique qui est située de préférence à l'intérieur de la gaine.

Dans ce cas, on peut, après usage de la gaine, retirer cette dernière de la matière pulvérulente en exerçant une traction sur l'armature.

Le dispositif selon la présente invention est particulièrement adapté à la réalisation de galeries verticales dans une matière pulvérulente.

L'invention sera mieux comprise au moyen de la description qui va suivre au regard du dessin annexé, donné à titre d'exemple non limitatif, dans lequel :
- la figure 1 est une vue schématique d'un mode de réalisation du dispositif selon l'invention;
- la figure 2 est une vue schématique illustrant une pénétration verticale du dispositif de la figure 1 dans une masse pulvérulente;
- la figure 3 est une vue schématique illustrant la remontée du conteneur de la figure 2 pour effectuer le déploiement de la gaine;
- la figure 4 est une vue schématique illustrant la gaine placée dans la masse pulvérulente;
- la figure 5 est une vue schématique illustrant la pose de gaines horizontales et
- les figures 6a, 6b et 6c sont des vues schématiques représentant l'enlèvement de la gaine par une traction sur l'armature hélicoïdale.

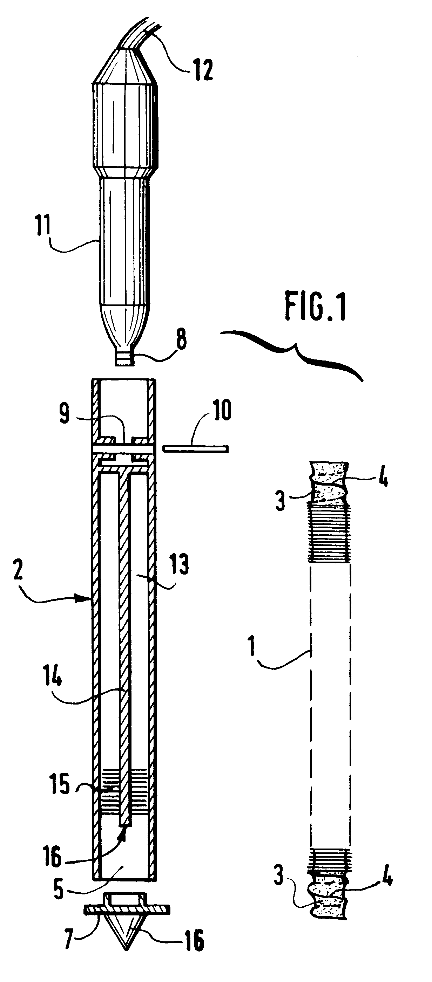

La figure 1, représente un mode de réalisation du dispositif selon la présente invention.

Ce dispositif comporte une gaine 1, susceptible de prendre une configuration compacte et une configuration déployée. Dans la configuration compacte, représentée sur la figure 1, la gaine qui a une structure annelée est comprimée axialement sur elle-même, de manière à réduire considérablement sa longueur, afin qu'elle puisse entrer dans le conteneur 2.

Dans la variante préférée, représentée sur la figure 1, la gaine comporte une armature constituée, par exemple, par un fil hélicoïdal en matière plastique ou en métal qui soutient la paroi 3 de la gaine en étant placée à l'intérieur de cette dernière.

Par mesure de simplification du dessin, cette armature hélicoïdale a été représentée sur la figure 1 par des traits parallèles, perpendiculaires à l'axe de la gaine, sauf aux extrémités de la gaine où l'on peut voir la paroi 3 de la gaine ainsi que l'armature hélicoïdale 4.

La paroi 3 de la gaine est constituée par exemple par un matériau tissé ou une feuille de matière plastique poreuse.

Une compression axiale de l'armature 4 permet d'obtenir la configuration compacte de la gaine 1.

Lorsque la gaine passe de sa configuration compacte à sa configuration déployée, le pas de l'armature hélicoïdale augmente fortement tandis que son diamètre diminue et que la paroi 3 de la gaine se déploie pour occuper une forme sensiblement cylindrique.

Selon une variante de l'invention, l'armature hélicoïdale intérieure est indépendante de ou faiblement fixée à la paroi de la gaine de sorte que l'on peut retirer l'armature par une simple traction sur son extrémitée située à l'extérieur de la masse pulvérulente après déploiement de la gaine. En l'absence d'armature, la gaine s'aplatit et peut être retirée facilement par simple traction.

Dans une autre variante, une traction sur l'armature qui reste solidaire de la paroi de la gaine provoque une diminution du diamètre de cette dernière et permet ainsi de retirer, après usage, la gaine de la matière pulvérulente.

Le diamètre interne de la gaine est généralement inférieur à 100mm. Il est par exemple compris entre 25 et 70mm et de préférence entre 50 et 60mm.

La longueur de la gaine est fonction du volume de la masse de matière pulvérulente dans laquelle la gaine doit être placée. Cette longueur peut aller jusqu'à plus de 100 mètres. Elle peut être par exemple de 10 et 60 mètres.

Dans une variante, la gaine comporte, à sa surface des ouvertures qui peuvent être réparties de manière quelconque. Ces ouvertures peuvent être obtenues simplement par perforation de la paroi de la gaine en particulier lorsque cette dernière est constituée par une feuille mince d'aluminium.

Selon un mode de réalisation préféré de l'invention, la gaine est stockée dans un conteneur 2 qui, dans l'exemple illustré sur la figure 1, a une forme sensiblement cylindrique avec une extrémité ouverte 5 qui peut être obturée par une pièce de fermeture 6 de forme avantageusement conique pour faciliter la pénétration du conteneur dans la masse de matière pulvérulente.

Lors de la mise en oeuvre du dispositif, la pièce 6 est reliée à une extrémité de la gaine 1 puis est légèrement fixée au corps du conteneur 2.

Lors de la phase de pénétration du conteneur 2 dans la matière pulvérulente, la pièce 6 est maintenue appliquée sur l'ouverture 5 du conteneur 6, par la pression exercée par la matière pulvérulente.

Par contre, pendant la phase de déploiement de la gaine 1, la pièce 6 qui est retenue par sa colerette 7 dans la masse pulvérulente se détache du conteneur 2 et reste dans cette dernière.

La pièce 6 permet ainsi le maintien d'une extrémité de la gaine 1 dans la masse de matière pulvérulente.

Dans l'exemple illustré sur la figure 1, le conteneur 2 est entraîné par une sonde vibrante ou à percussions 11 qui s'engage par son extrémité avant 8 dans un orifice 9 du conteneur où elle est maintenue par exemple par une goupille 10.

Une telle sonde alimentée par un câble électrique ou un tube à air comprimé 12 est décrite dans la demande de brevet français 90.02685 déposée le 5 Mars 1990. Elle comporte une enceinte contenant un piston frappeur qui agit dans un sens sur une zone de frappe avant ou dans l'autre sens sur une zone de frappe arrière. Les chocs du piston frappeur sur la zone de frappe avant font avancer la sonde et inversement.

De telles sondes vibrantes ou à percussions peuvent être actionnées électriquement ou pneumatiquement. Elles permettent de propulser le conteneur 2 contenant la gaine 1 dans sa configuration compacte vers l'intérieur de la masse de matière pulvérulente ou en sens inverse pour procéder au déploiement de la gaine.

Des expériences pratiquées par la société déposante ont révélé, que, de façon surprenante, la présence du conteneur 2 contenant la gaine 1 devant la sonde 11 facilite la pénétration de cet ensemble dans la masse de matière pulvérulente. C'est ainsi que la sonde 11 accouplée au conteneur 2 s'enfonce plus rapidement dans la matière pulvérulente que si elle était seule.

Comme on le voit sur la figure 1, le corps central du conteneur comporte axialement dans sa cavité 13 une tige 14 munie radialement de fils de nylon semi-rigides 15 qui viennent jusqu'au voisinage de la paroi interne de la cavité 13 en formant un goupillon 16 dont la tête est au voisinage de l'ouverture 5 du conteneur.

Grâce à la flexibilité des fils 15, la gaine 1 peut être introduite en configuration compacte dans le conteneur 2 dans lequel elle est retenue par les fils semi-rigides 15 du goupillon 16.

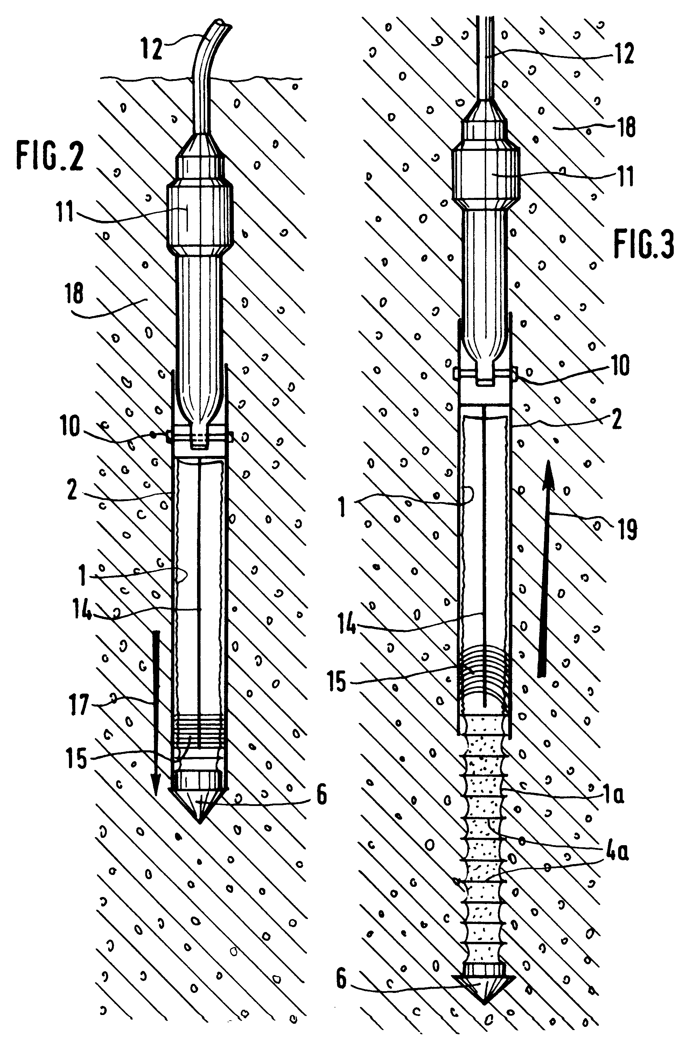

La figure 2, représente le dispositif selon l'invention lors de sa descente sensiblement verticale dans une masse de matière pulvérulente 18.

Sous l'action de la sonde 11, la descente du conteneur dans la matière pulvérulente 18 s'effectue dans le sens de la flèche 17 jusqu'à la profondeur désirée, par exemple, jusqu'au voisinage du fond d'un silo ou d'une cale de bateau.

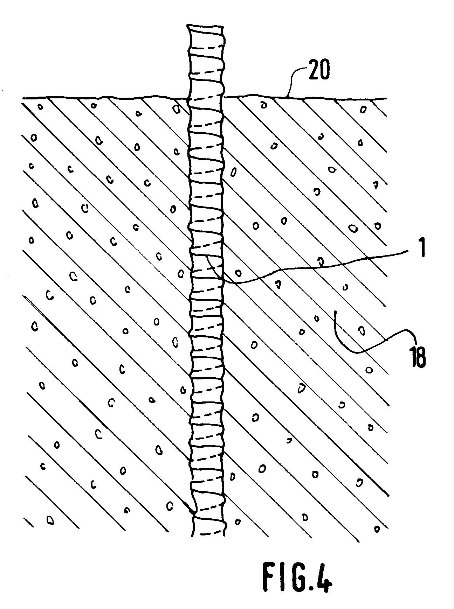

Grâce à un signal de télécommande approprié on provoque ensuite la remontée de la sonde 11 et du conteneur 2, dans le sens de la flèche 19 de la figure 3, tandis que le goupillon 16 retient la gaine 1 à l'intérieur du conteneur et assure son déploiement régulier lors de la remontée du conteneur.

On voit en 1a sur la figure 3, la partie déployée de la gaine 1 dont l'extrémité inférieure est maintenue en place par la pièce 7.

La partie 1a de la gaine a été représentée sur la figure 4 avec une armature constituée par une succession d'anneaux 4a, mais il est clair qu'il est généralement plus facile de réaliser une armature de forme hélicoïdale comme précédemment décrit.

Dans une variante, le goupillon 16 peut être remplacé par une pièce en mousse élastique sur laquelle la gaine, dans sa configuration compacte, est enfilée avec frottement. L'action de la mousse élastique évite le déploiement prématuré de la gaine lors de la remontée du conteneur.

Sur la figure 4, on peut voir une gaine 1 déployée à l'intérieur de la masse 18 d'une matière pulvérulente jusqu'à la surface 20 de cette dernière.

La gaine 1 constitue ainsi un puits que confère un accès à l'intérieur de la masse pulvérulente.

La gaine 1 est avantageusement perméable ou comporte des ouvertures permettant d'envoyer dans la masse pulvérulente, des gaz ou des liquides, par exemple en vue d'un traitement de celle-ci. Il est aussi possible de descendre dans la gaine des moyens d'acquisition de données pour s'assurer par exemple que des grains stockés dans la cale d'un bateau sont de bonne qualité et en bon état de conservation.

La gaine permet également de prélever des échantillons de matière pulvérulente à différentes profondeurs.

De même, elle permet d'effectuer un traitement, de la matière pulvérulente comme par exemple l'aération ou le séchage, ainsi que l'injection de matières destinées à lutter contre les parasites.

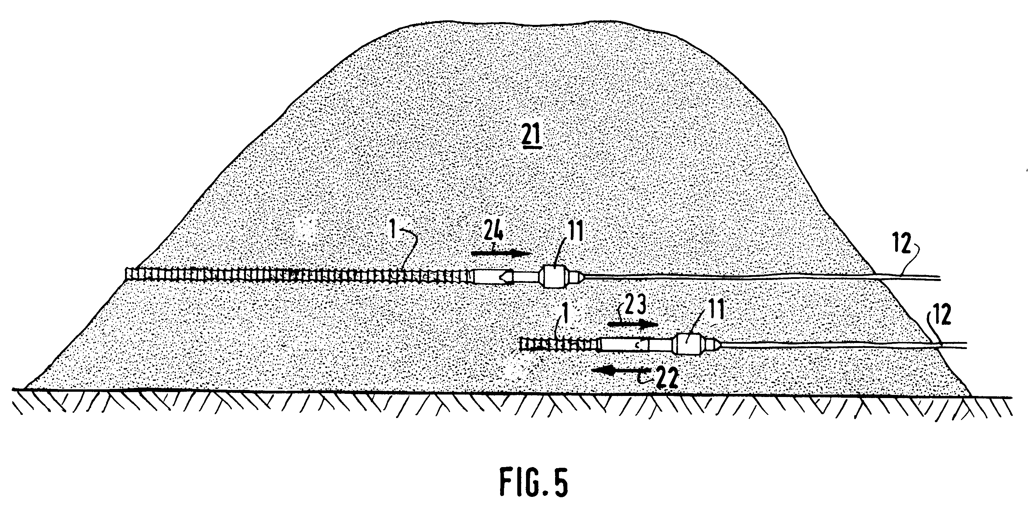

Sur la figure 5, on a représenté une utilisation horizontale du dispositif selon la présente invention, par exemple pour placer une gaine en travers d'un tas 21 de matière pulvérulente.

A la partie inférieure de la figure 5, on a représenté un dispositif selon la présente invention qui après avoir pénétré selon la flèche 22, jusqu'au milieu du tas revient dans le sens de la flèche 23 en déployant la gaine 1 du centre vers la droite du tas 21.

On voit également sur la figure 5 comment on peut déployer selon l'invention, une gaine 1 qui traverse de part en part le tas 21 de matière pulvérulente en étant déployée dans le sens de la flèche 24.

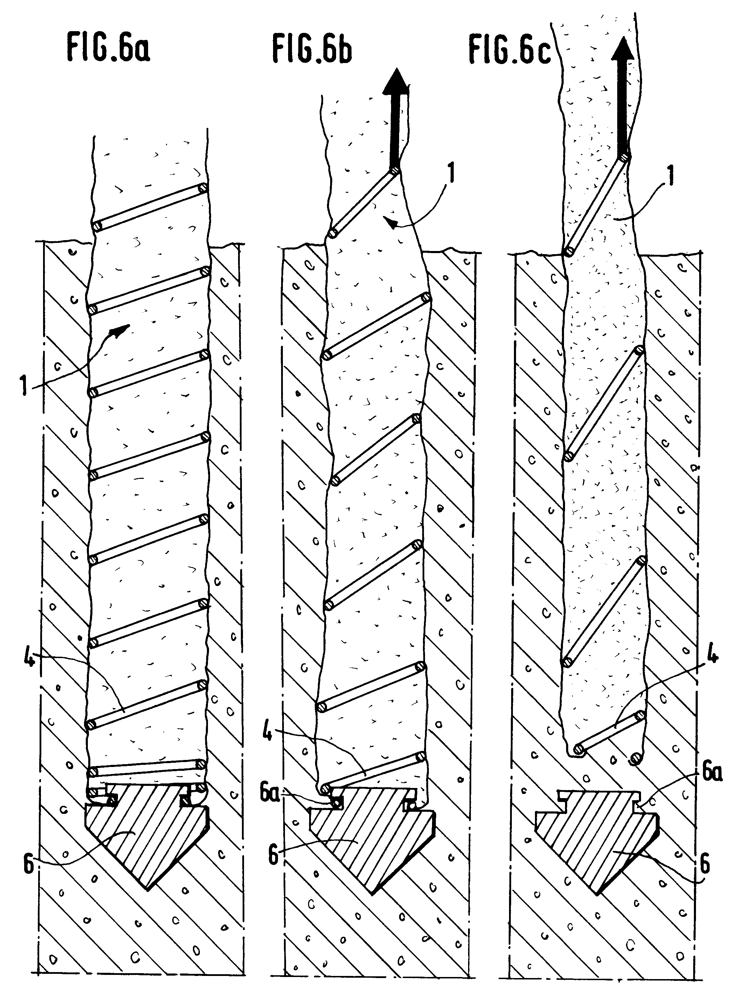

On a représenté sur les figures 6a, 6b et 6c comment après usage, on peut extraire la gaine 1 de la masse de matière pulvérulente en exerçant une traction sur l'armature hélicoïdale de la gaine.

On voit sur la figure 6a la gaine 1 en position d'utilisation, son armature 4 étant solidaire de la pièce 6 qui obture la partie inférieure du conteneur 2 par le fait que la partie inférieure de l'armature s'engage élastiquement dans la gorge 6a de la pièce 6.

On voit sur la figure 6b comment une traction selon la flèche déforme l'armature 4 en diminuant le diamètre de la gaine puis sur la figure 6c comment l'armature se dégage de la gorge 6a, la pièce 6 restant sur place tandis que la gaine est extraite par le haut.

Il est bien entendu que les exemples donnés ci-dessus ne présentent aucun caractère limitatif et qu'ils pourront recevoir toutes modifications désirables sans sortir pour cela du cadre de l'invention.

## Revendications

1. Procédé de déploiement d'une gaine à l'intérieur d'une masse de matière pulvérulente selon lequel la gaine est déployée à partir d'une configuration compacte, caractérisé par le fait que la gaine (1) est amenée dans sa configuration compacte en un point de la masse de matière pulvérulente (18) et, qu'en maintenant fixe une extrémité de la gaine (1), on déplace l'autre extrémité vers l'extérieur de la masse de matière pulvérulente (18) en provoquant ainsi le déploiement de la gaine.

2. Procédé selon la revendication 1, caractérisé par le fait que l'on place la gaine dans sa configuration compacte dans un conteneur (2) dont l'extrémité détachable (6) solidaire d'une extrémité de la gaine (1) reste en position fixe dans la masse de matière pulvérulente (18) lorsque l'on déplace le conteneur (2) vers l'extérieur de la masse pulvérulente.

3. Procédé selon l'une quelconque des revendications 1 et 2, caractérisé par le fait que l'on déplace la gaine (1) dans la masse pulvérulente à l'aide d'une sonde (11) se déplaçant par vibrations ou par percussion dans l'un ou l'autre sens.

4. Procédé de traitement de grains caractérisé par le fait que l'on déploie au moins une gaine perméable (1) à travers une masse de grains de céréales (18) par le procédé selon l'une quelconque des revendications 1 à 3 ; que l'on injecte un produit de traitement de céréales, par exemple de l'air sec ou chaud pour les aérer ou les sécher, ou des matières fumigatoires ou gazeuses de lutte contre les parasites et/ou que l'on ventile ou l'on met en dépression l'intérieur de la gaine (1) pour, par exemple, extraire un gaz se trouvant dans la masse (18) des grains.

5. Dispositif pour la mise en oeuvre du procédé selon l'une quelconque des revendications 1 à 4, comportant une gaine apte à être mise dans une première configuration compacte et dans une deuxième configuration déployée, caractérisé par le fait qu'il comporte un conteneur (2) ouvert à une de ses extrémités (5) pour recevoir la gaine (1) dans sa configuration compacte, une pièce (6), de préférence profilée pour faciliter la pénétration du conteneur à l'intérieur de la masse pulvérulente (14), étant solidaire de la gaine (1) et s'adaptant à l'avant du conteneur (2) de manière détachable pour rester dans la masse de matière pulvérulente lors du déploiement de la gaine.

6. Dispositif selon la revendication 5, caractérisé par le fait que le conteneur (2) comporte un moyen de retenue pour retenir la gaine (1) dans sa configuration compacte à l'intérieur du conteneur lors de son déploiement.

7. Dispositif selon la revendication 6, caractérisé par le fait que le moyen de retenue a la forme d'un goupillon (16) muni d'une série de fils semi rigides (15) disposés radialement et dont les extrémités prennent appui contre l'intérieur de la gaine (1) dans sa configuration compacte.

8. Dispositif selon la revendication 6, caractérisé par le fait que le moyen de retenue est une mousse déformable.

9. Dispositif selon l'une quelconoue des revendications 5 à 8, caractérisé par le fait que la gaine (1) a une forme de soufflet annelé de section sensiblement circulaire.

10. Dispositif selon l'une quelconque des revendications 5 à 9, caractérisé par le fait que la gaine (1) comporte des ouvertures ou perforations.

11. Dispositif selon l'une quelconque des revendications 5 à 10, caractérisé par le fait que la gaine (1) est réalisée en aluminium plissé.

12. Dispositif selon l'une quelconque des revendications 5 à 11, caractérisé en ce que la gaine (1) est réalisée en tissu perméable.

13. Dispositif selon l'une quelconque des revendications 5 à 12, caractérisé par le fait que la gaine (1) comporte une armature 4 intérieure constituée par un fil enroulé sensiblement en hélice.

14. Dispositif selon la revendication 13, caractérisé par le fait qu'en exerçant une traction sur le fil d'armature (4) on peut retirer la gaine de la masse de matière pulvérulente en y abandonnant la pièce (6) qui obture l'extrémité du conteneur (2).

FIG.1

FIG.2

FIG.3

FIG.4

FIG.5

# FIG.6a FIG.6b FIG.6c

**Office européen des brevets**

## RAPPORT DE RECHERCHE EUROPEENNE

Numero de la demande

EP    91 40 2391

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2 545 690 (PESTCON SYSTEMS, INC.)<br><br>* page 7, ligne 33 - page 8, ligne 19; figure 3 *<br><br>* page 11, ligne 10 - page 11, ligne 34; figure 3 *<br><br>--- | 1,2,4,5, 9-12 | A01M17/00 |
| A | DE-A-3 528 024 (JAC. BLOK B.V., TROOST RECYCLING B.V.)<br>* colonne 3, ligne 67 - colonne 4, ligne 17; figures 7,8 *<br><br>--- | 1,5 | |
| A | FR-A-2 487 638 (CABROL L., CABROL M.)<br>* page 1, ligne 28 - page 1, ligne 35; revendication 2; figure 1 *<br><br>--- | 4 | |
| A | AU-B-4 916 179 (NIGEL ANTHONY TUCKER)<br><br>----- | | |

**DOMAINES TECHNIQUES RECHERCHES (Int. Cl.5 )**

A01M

Le présent rapport a été établi pour toutes les revendications

| Lieu de la recherche | Date d'achèvement de la recherche | Examinateur |
|---|---|---|
| LA HAYE | 18 DECEMBRE 1991 | VISTISEN L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P0402)